# EUROPEAN PATENT APPLICATION

(11) **EP 4 120 728 A1**
(43) Date of publication of application: **18.01.2023**
(21) Application number: 22184203.2
(22) Date of filing: 11.07.2022
(51) Int. Cl.: H04W 28/02

(54) **SYSTEM AND METHOD FOR MANAGING RADIO TRAFFIC FOR MOBILE AND WIRELESS DEVICES**

(30) Priority: 13.07.2021 IN 202111031424
(71) Applicant: Sandvine Corporation, Waterloo, Ontario N2L 3V3 (CA)
(72) Inventor: PATIL, Rajeshwar, 560102 Bengaluru (IN)
(74) Representative: Ipey

(57) **Abstract**

A system and method for radio traffic management in a computer network. The method includes: determining user equipment (UE) status associated with a traffic flow session; determining traffic flow parameters associated with the traffic flow associated with the UE; determining a change in the UE status; and determining a traffic action for at least one packet associated with the traffic flow based on the UE status. The system includes: a UE state module configured to determine UE status associated with a traffic flow session; a packet inspection module configured to determine traffic flow parameters associated with the traffic flow associated with the UE; a forwarding module configured to determine a traffic action for at least one packet associated with the traffic flow based on the UE status.

## Description

### RELATED APPLICATIONS

The present disclosure claims priority to Indian Patent Application No. 202111031424 filed July 13, 2021, which is hereby incorporated herein in its entirety.

### FIELD

The present disclosure relates generally to managing computer network traffic. More particularly, the present disclosure relates to a system and method for managing radio traffic and saving battery life of a mobile device using traffic management.

### BACKGROUND

Network traffic continues to increase all over the world. As network traffic increases, service and network providers try to optimize the use of their networks in order to maximize customer satisfaction and throughput of the networks.

Transmission Control Protocol (TCP) is a widely used protocol for internet access everywhere. TCP was primarily designed for computers and TCP was never optimized for mobile/wireless devices.

Mobile and wireless devices are now frequently used for Internet access. As more and more mobile and wireless devices access the Internet there is a desire to provide for better management and, ideally, optimization for the radio traffic for these devices.

It is, therefore, desirable to provide an improved method and system for radio traffic management for mobile and wireless devices.

The above information is presented as background information only to assist with an understanding of the present disclosure. No determination has been made, and no assertion is made, as to whether any of the above might be applicable as prior art with regard to the present disclosure.

### SUMMARY

In a first aspect, there is provided a method for radio traffic management in a computer network, the method including: determining user equipment (UE) status associated with a traffic flow session; determining traffic flow parameters associated with the traffic flow associated with the UE; determining a change in the UE status; and determining a traffic action for at least one packet associated with the traffic flow based on the UE status.

In some cases, the change in the UE status is a change from active to idle and the traffic action may be to queue packets until there is a further UE change in status.

In some cases, the change in the UE status is a change from active to idle and the traffic action may be to close the traffic flow session with a server.

In some cases, the change in the UE status is a change from active to idle and the traffic action may be to respond to a TCP window probe on behalf of the UE.

In some cases, the change in the UE status is a change from idle to active and the traffic action may be to respond to at least one packet initiated by the UE.

In some cases, the queued packets may be transmitted to the UE on a change from idle to active.

In some cases, the queued packets may be transmitted to the UE after a predetermined time threshold is met.

In some cases, the queued packets may be transmitted to the UE after a predetermined number of packets have been queued.

In some cases, the method may further include: receiving a UE packet from the UE; determining if the UE packet is associated with a previously closed connection; and transmitting a further packet to the UE to close the connection for the UE.

In some cases, the method may further include: determining if the UE status is idle; determining if the at least one packet is a time critical packet; if the at least one packet is not time critical, storing the packet for a predetermined amount of time or until there is a change in UE status; and if the at least one packet is time critical, sending the packet to the UE.

In another aspect, there is provided a system for radio traffic management in a computer network, the system including: a User Equipment (UE) state module configured to determine UE status associated with a traffic flow session; a packet inspection module configured to determine traffic flow parameters associated with the traffic flow associated with the UE; a forwarding module configured to determine a traffic action for at least one packet associated with the traffic flow based on the UE status.

In some cases, if the UE state module determines there has been a change in the UE status from active to idle, the forwarding module may be configured to queue packets until there is a further UE change in status.

In some cases, if the UE state module determines there has been a change in the UE status from active to idle, the forwarding module may be configured to close the traffic flow session with a server.

In some cases, if the UE state module determines there has been a change in the UE status from active to idle, the forwarding module may be configured to respond to a TCP window probe on behalf of the UE.

In some cases, if the UE state module determines there has been a change in the UE status from idle to active, the forwarding module may be configured to respond to at least one packet initiated by the UE.

In some cases, the forwarding module may be configured to transmit the queued packets to the UE when the UE statue module determines there has been a change of status from idle to active.

In some cases, the forwarding module may be configured to transmit queued packets to the UE, when the UE remains in idle status, after a predetermined time threshold is met.

In some cases, the forwarding module may be configured to transmit queued packets to the UE, when the UE remains in idle status, after a predetermined number of packets have been queued.

In some cases, the packet inspection module may be configured to determine if a packet has been received from the UE; the analysis module may be configured to determine the UE packet is associated with a previously closed connection; and the forwarding module may be configured to transmit a further packet to the UE to close the connection for the UE.

In some cases, the UE state module may be configured to determine if the UE status is idle; the packet inspection module may be configured to determine whether the at least one packet is a time critical packet; if the at least one packet is not time critical, the forwarding module may store the packet for a predetermined amount of time or until there is a change in UE status; and if the at least one packet is time critical, the forwarding module may send the packet to the UE.

Other aspects and features of the present disclosure will become apparent to those ordinarily skilled in the art upon review of the following description of specific embodiments in conjunction with the accompanying figures.

### BRIEF DESCRIPTION OF FIGURES

Embodiments of the present disclosure will now be described, by way of example only, with reference to the attached Figures.
Fig. 1 illustrates a conventional closing of a TCP connection;
Fig. 2 illustrates an environment for a system for managing radio traffic according to an embodiment;
Fig. 3 illustrates a conventional sequence diagram for server initiated timeout;
Fig. 4 illustrates a convention closing retransmission of TCP;
Fig. 5 illustrates conventional server initiated notifications;
Fig. 6 illustrates a conventional TCP Zero Window probe from a server;
Fig. 7 illustrates a system for managing radio traffic according to an embodiment;
Fig. 8 illustrates a method for managing radio traffic according to an embodiment;
Fig. 9 illustrates a sequence diagram for server initiated timeout according to an embodiment of the method for managing radio traffic;
Fig. 10 is a flow chart for server initiated timeout according to an embodiment of the method for managing radio traffic;
Fig. 11 illustrates a closing retransmission of TCP according to an embodiment of the method for managing radio traffic;
Fig. 12 is a flow chart for closing retransmission of TCP according to an embodiment of the method for managing radio traffic;
Fig. 13 illustrates server initiated notifications according to an embodiment of the method for managing radio traffic;
Fig. 14 is a flow chart for server initiated notifications according to an embodiment of the method for managing radio traffic;
Fig. 15 illustrates a TCP Zero Window probe from a server according to an embodiment of the method for managing radio traffic; and
Fig. 16 is a flow chart for a TCP Zero Window probe from a server according to an embodiment of the method for managing radio traffic.

### DETAILED DESCRIPTION

Generally, the present disclosure provides a method and system for managing radio traffic for a mobile or wireless device. It is intended that the management of the radio traffic will lead to optimized radio traffic. In particular, embodiments of the system and method are intended to review network traffic between a mobile device and a server in order to determine the type of communication. Embodiments of the system and method are further configured to determine the mobile radio state to determine whether the mobile device is in an active or idle state. In some cases, the state of the device may be stored and updated in a memory component of the system. If there has been no communication with the device over a predetermined timeout threshold the mobile device may be considered to be idle. In some cases, the system may hold or store packets to be transmitted to the mobile device and/or server until the mobile device is active. In other cases, the system may send packets on behalf of the server and/or mobile device in order to terminate communication such that the device remains in idle state. Embodiments of the system and method are intended to optimize radio traffic in a manner such that the mobile device will not be woken inappropriately from an idle state and thus save battery resources.

A fully active wireless radio interface in wireless devices can consume significant amount of power and the transition between different power states such as idle, active, and standby is important when the radio interface is not in use. When a packet needs to be sent or received by a mobile or wireless device, the radio switches to high power mode and tends to remain in that mode for some time. The radio tends to remain in an active state as the radio expects further packets in the near future. The radio will generally switch to idle mode or an inactive mode after some predetermined amount of time. The more time spent in high power mode, the higher the battery drain on the wireless devices.

Mobile devices are frequently used for Internet access. A large contributor to the drainage of the battery can be the use of the Internet through, for example, a mobile data network. Generally speaking, the more messaging with the mobile data the network, the higher the drainage of the battery. If unwanted traffic between the mobile phone and servers could be blocked, for example, at a data plane device, it would save unnecessary use of radio resources and therefore battery use on mobile devices.

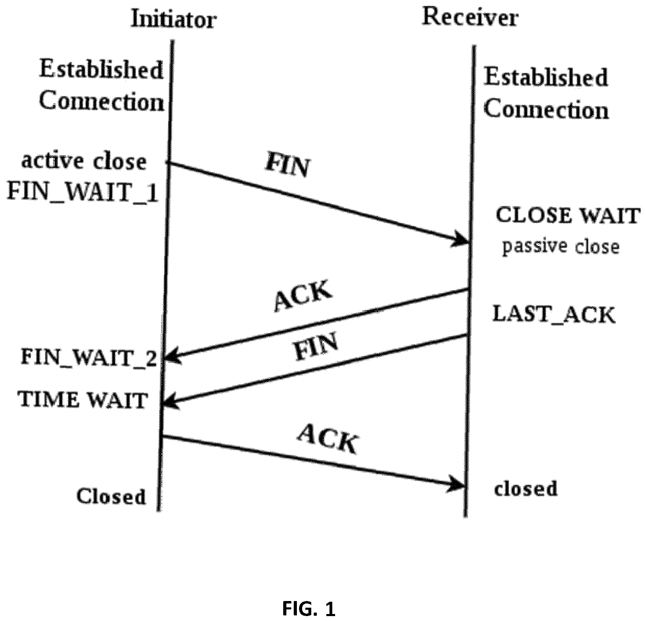

Transmission Control Protocol (TCP) is still a widely used protocol for Internet access. Unfortunately, TCP was never optimized for the mobile/wireless devices. Figure 1 illustrates an example of TCP connection closure which tends to be acknowledged by both client and server. Where, if the server initiated a closure, then server sends TCP FIN to the client and then client sends an ACK packet and then also sends TCP FIN packet which the server receives and responds with an ACK for the FIN.

If the user operating a mobile device, opens a website (news, articles, blogs, or the like) or does a search on a search engine website, then reads the opened page, there is typically no data needed to be used by wireless device after the initial loading. In some cases, after a predetermined time or the like, this may cause the mobile device radio interface to switch to a power saving or idle mode. When the webserver sees that TCP connection with wireless device is idle for few seconds then the server may initiate a TCP FIN to save resources on the server. This TCP FIN packet reaches the mobile device and wakes the radio of the mobile device and the radio interface of the mobile device switches to high power mode which in turn causes battery drain.

Generally, in TCP, retransmission of packets occurs due to packet loss which may be caused by poor network, congestion, queue failures on network device and the like. However, retransmission of the TCP connection closure packet, and in particular a TCP FIN packet, can occur even in good network conditions. In some cases, where some video is being streamed and a user locks the screen or receives a call, the streaming application is likely to go into the background. The server may then close the TCP connection with the application as the connection with the client (the mobile device) is idle. When the streaming application returns to the foreground, the application will note that the server has closed the connection. The streaming application may now attempt to close the connection by sending TCP FIN packet but as the server has already closed the connection, the User Equipment (UE)/mobile devices does not get a response. The UE may then retransmit TCP FIN several times which may contribute to battery drain. In some examples disclosed herein the term mobile device is used as an example. It will be understood that other user equipment (UEs) may operate similarly and can benefit from embodiments of the system and method disclosed herein.

In TCP, the data flow between the client and the server is controlled through a TCP window size. The client and the server exchange their buffer size through the TCP window size. A TCP window probe may imply that the receiver has reduced its receive buffer (sometimes referred to as its window) to zero. This is intended to tell or request the sender to stop sending. Usually, this request is based on, for example, performance reasons, business of the receiver application, or the like. If the receiver does not recover and send, for example, "Window Update" with a buffer size greater than zero (meaning, the sender may be allowed to continue or restart sending). The sender may become "impatient" at some point and check if the receiver is able to receive more data. The check is often referred to as a Zero Window Probe.

Retransmission of TCP zero window probe packets occur when the data download is intervened abruptly from the application. This situation may occur for various reasons, including, the mobile screen is tuned off, a call is received, or the like. These events may require the application to go into the background and no longer read any received data from the socket sent by server. This causes the client/mobile device to send a zero window to the server. Further, the server stops sending further data to the client. If the client is inactive after the zero window detection, the server starts sending probe packets periodically and afterwards closes the connection by sending FIN/RST. This creates unnecessary power drain by waking up the radio of the mobile device to receive the probe packets from the server and client acknowledges these probe packets with zero window update.

Mobile devices, when not sending any data, generally update to a radio power saving mode. It will be understood that in this mode, there are several applications running in the background which may receive updates from various servers. Every update received by the mobile device from a server wakes the radio of the mobile device. These messages from the server may include advertisement from the server, software update notifications, offers, promotions or the like. Any of these notifications from the servers are sent to mobile devices at various times which may cause the mobile devices radio interface to wake several times.

Typically, in 5G, Access and Mobility Management Function (AMF) network function notifies subscribed Network functions about the connectivity state of the mobile device. Generally, the AMF notifies the 5G network functions about the two radio states IDLE and CONNECTED for each mobile device. The IDLE state indicates that a mobile device is in IDLE state (radio is disconnected and idle, power saving mode) and the CONNECTED state is the one where mobile device's radio interface is ACTIVE and is in high power mode. The notifications from AMF may be used to gauge the radio state of the mobile device on the data plane.

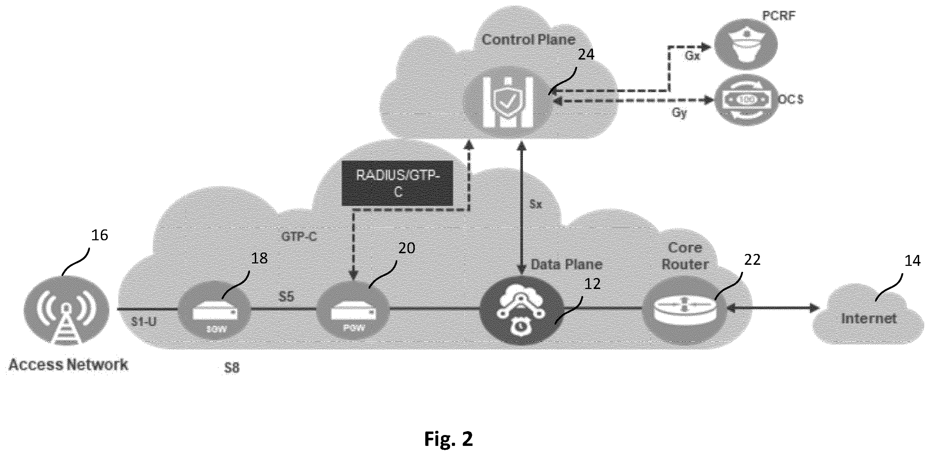

Figure 2 illustrates a conventional network environment 10. Network traffic travels through a data plane 12, which has visibility of traffic flows from a subscriber or to the subscriber. A subscriber (not shown) accesses the Internet 14 via an access network 16. Traffic, from a subscriber, travels via a Serving Gateway (SGW) 18 and a Packet Gateway (PGW) 20 prior to the data plane 12. The packet may then be routed by a core router 22 to a server hosting content on the Internet 14. The data plane 12 is also in communication with a control plane 24 which includes further network devices configured to review and monitor subscriber traffic flows. Traffic flows in the opposite direction when travelling from the server to the subscriber.

In particular, embodiments of the system and method are intended to review the traffic flow and the subscriber mobile device radio state. From the collected data regarding the traffic flow and radio state, the system and method may determine an action with respect to the patent currently travelling to or from the subscriber to or from the server.

Generally, in a TCP connection, a server will want to determinate an idle connection to free resources that could serve other subscribers. In particular, a server is likely to initiate a TCP FIN connection after a connection is idle for a predetermined amount of time. It has been noticed that this TCP FIN action wakes an idle radio interface of the mobile device causing the mobile device to enter in high power active mode.

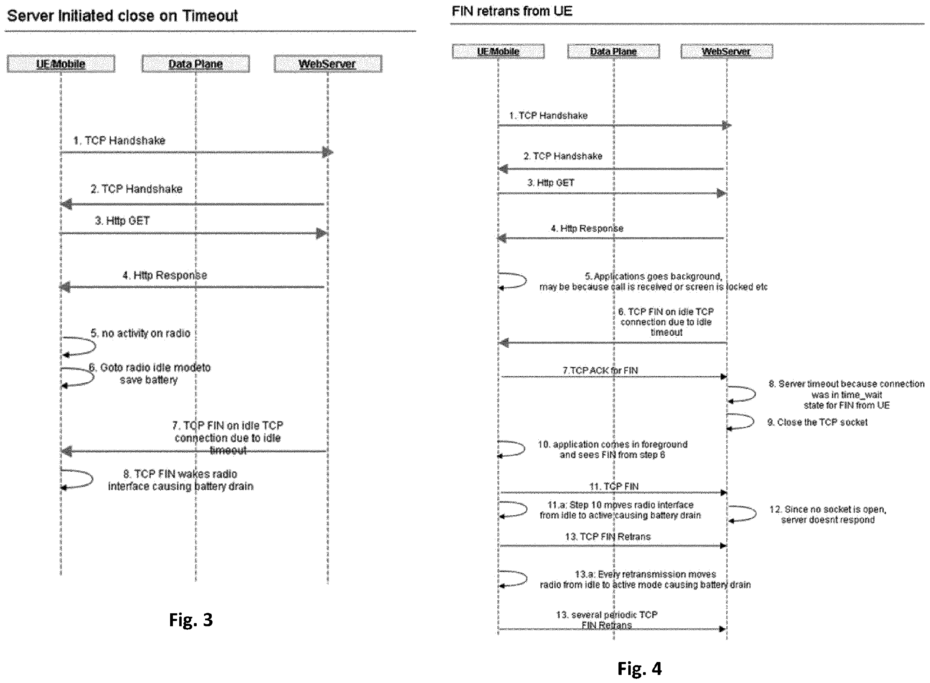

Figure 3 illustrates a sequence diagram of a conventional server initiated close on timeout. A TCP connection is established between a client and a server via a TCP handshake. The User Equipment (UE) such as a mobile device requests to opens a website, for example news.com. The server sends a response in HTTP packet to the mobile device. As the mobile device is no longer requesting any data, the mobile device's radio goes in power saving mode. After a predetermined timeout time, the server initiates a TCP closure packet because TCP connection is idle. This packet wakes up the idle radio on mobile device causing battery drain.

In another example, whenever a mobile device tries to close a TCP connection after the connection has already been closed by a server, the TCP FIN packet from the mobile devices may not be acknowledged. The mobile device generally will continue the retransmission of TCP FIN indefinitely and each retransmission may wake the radio interface of mobile device.

The conventional scenario of the TCP FIN packet retransmission is illustrated in Figure 4 sequence diagram. The TCP connection is established between client and server, via the TCP handshake. The mobile device may request a website or the like, and the server sends a response in HTTP packet to mobile device. At some point, the mobile device may receive a call, or the screen may otherwise be locked, and the browser application may go into the background. The server sends a TCP FIN as the TCP connection is idle for a predetermined idle period at the server end. This TCP FIN may not be received or processed by the application because the application is in background. The server then waits for few seconds for TCP FIN from client, because in this case TCP FIN is not sent, server closes the socket from its end.

Whenever the browser returns to the foreground, for example the call is ended, the browser application will process the TCP FIN packet and sends a TCP FIN in response to server. As the server does not have the TCP connection open any further, the server will not respond. Receiving no response, the application of the mobile device is likely to assume that the TCP FIN was dropped due to network error or bad transmission. As such, the application, via the mobile device will send TCP FIN retransmissions several times. Each time a TCP FIN retransmission is sent, the mobile device will wake the radio interface from a power saving mode to active mode causing battery drain.

In another example, various download or push messages from servers to mobile devices can wake the radio interface of the mobile device.

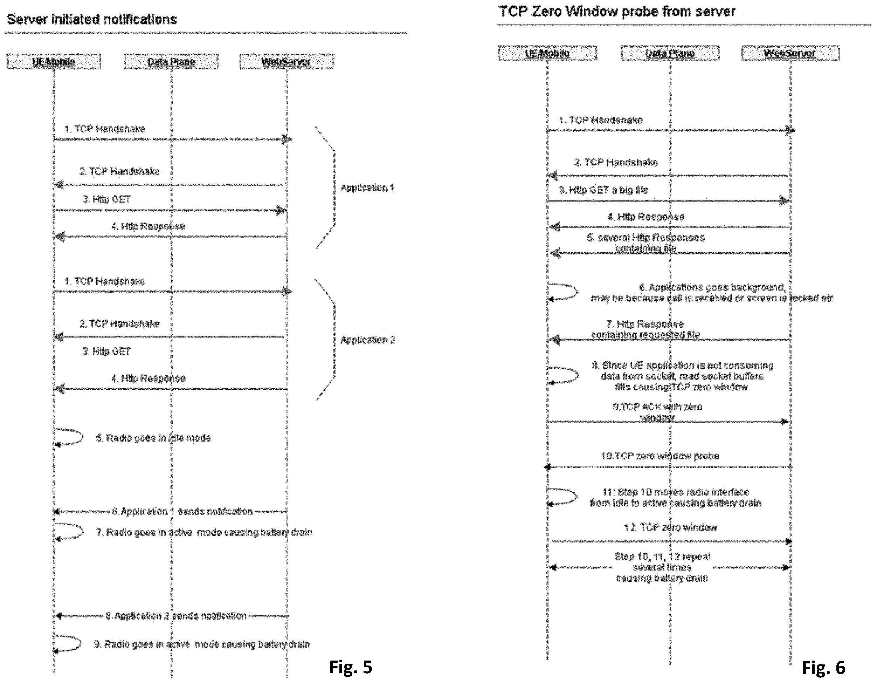

Figure 5 illustrates an example of conventional server initiated notifications. In this example, two applications have started which in turn establish TCP connections with their corresponding servers. At some point, the radio interface of the mobile device goes into power saving mode because there is no activity on the radio interface. In this example, Application1 may receive a notification from the server of that application and radio switches to active power mode and then after some time the radio interface may return to power saving mode again. Later, Application 2 may send a notification and again the radio switches to active power mode. In this example, it can be seen that the radio is switching to active power mode as many times as notifications are received causing battery drain with each notification.

A further scenario that causes the radio interface of the mobile device to wake is TCP zero window probes from a server. Figure 6 illustrates an example of a conventional TCP Zero Window probe. A TCP connection is established between the client and the server. The client, an application on the mobile device downloads a large file or video. The server sends a response in several HTTP packets to the mobile device which has file content or video. In this example, a call may be received by the mobile device, the screen may lock, or another event may incur that causes the downloading application to go into the background. The server continues to send the remaining video/file, but as the application is not reading data from the socket, the read buffer on mobile device socket fills up. Once this is full, the mobile device will advertise TCP zero window towards the server. As the mobile screen is locked, the radio may enter power saving mode. In many cases, the server will continue to probe the client device to determine whether there is now room in the client's receive buffer. This probe may be repeated periodically, for example at predetermined time intervals. Each probe may wake the radio interface on the mobile device to respond to the zero window probe from the server causing battery drain.

It has been determined that in the above examples, the radio interface transition from battery saving mode to active mode causes power consumption on mobile devices and other user equipment, thus causing battery drain. Embodiments of the system and method detailed herein are intended to use the data plane in the core network to reduce the mobile device radio wakeup events. By reducing the wakeup events, it is intended to reduce power consumption on mobile/UE devices

Mostly conventional solutions have been on modifying the mobile device's software/operating system to solve some of the issues noted above. In some other cases, there has been attempts to the TCP protocol to introduce new message sequencing or the like. This may be inefficient as it is not possible to change every mobile device and its associated software. Embodiments of the system and method detailed herein are intended to be applied to a central network device in, for example the data plane in the core network. An advantage of embodiments of the system and method detailed herein are intended to provide a solution without modifying mobile devices or TCP protocol.

Embodiments of the method and solution detailed herein are intended to employ Deep Packet Inspection (DPI) to add application awareness. It is intended that the embodiments of the system and method are configured to review both uplink and downlink traffic of all mobile devices. Embodiments of the system and method are intended to reduce unwanted traffic that wakes the mobile device from an idle radio state.

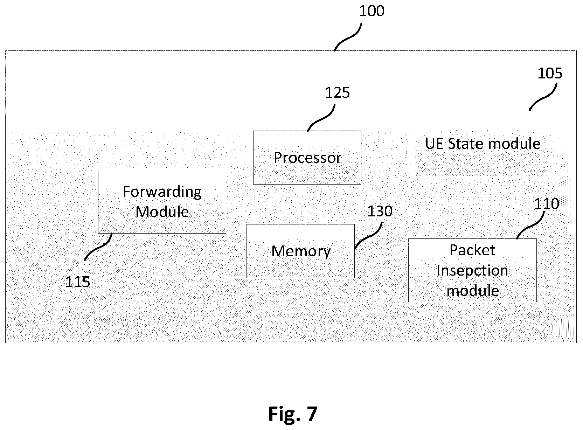

Figure 7 illustrates a system 100 for managing radio traffic according to an embodiment. The system 100 includes a User Equipment (UE) State module 105, a Packet Inspection module 110, a Forwarding Module 115, at least one processor 125 and at least one memory component 130. The system is generally intended to reside on the core network but may be distributed and may be in-line with the traffic flow or may be offline and receive data from another network device. The modules, including the processor 125 and memory 130, are in communication with each other but may be distributed over various network devices or may be housed within a single network device. The processor may be configured to retrieve stored instruction from the memory 130 and execute the instructions that provide for the functionality of the modules. The system 100 is intended to receive information from the computer network equipment that allows the system to determine traffic flow parameters, including deep packet inspection data such as application type, traffic session metrics (for example, timestamps and the like) and the like.

The UE state module 105 is configured to determine the state or status of a radio interface of a mobile device or other user equipment. In particular, the UE state module 105 may determine and track the activity and time of activity of the UE to determine whether it is likely that the UE radio interface is active or idle. It is intended that in an active state the UE would be sending and receiving packets as part of the traffic flow and would be in a higher battery operating mode. If the UE is no longer actively sending and receiving packets after a predetermined idle threshold, the UE may be considered idle and in a lower battery operating mode. The predetermined idle threshold may be based on an operator's standard and may vary from operator to operator. The predetermined idle threshold may be configurable and changed by the operator during operation of the system and method.

The system 100 may further include or be operatively connected with the packet inspection module 105. The packet inspection module 105 may be configured to perform deep packet inspection (DPI) or may receive results from a network device module performing DPI and may use the DPI data to determine a packet type and packet parameters, for example, application type, application name, timestamp, flow information, and the like.

The forwarding module 115 is configured to make a determination as to whether to forward the packet, respond to the packet without forwarding the packet or hold the packet to send at a later time.

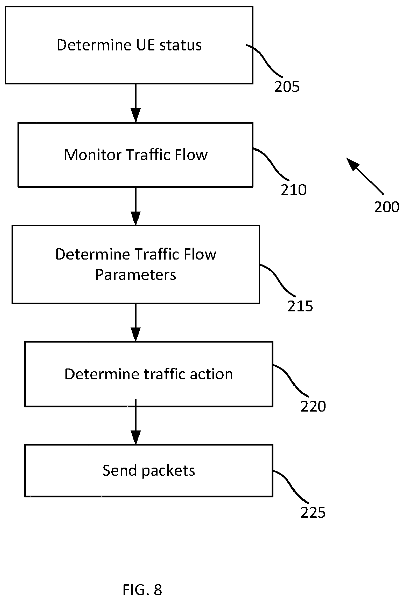

Figure 8 illustrates a method 200 for managing radio traffic according to an embodiment. The UE state module 105 determines whether a UE has started a session and determines that the UE is currently active, at 205. The packet inspection module 110 monitors the traffic flow at 210 and determines traffic parameters at 215. The UE state module 105 continues to monitor the UE state throughout the session to determine if the state of the UE has become idle. If the state of the UE has become idle, the traffic flow is further analyzed by the forwarding module 115 to determine a traffic action. In some cases, at 220, the forwarding module may send a response packet. In other situations, the forwarding module 115 may send a response packet to a server in order to terminate a connection with the server without changing the state of the UE. In still other cases, the forwarding module 115 may hold and store the packet to send to the UE at a later time when the state of the UE has changed to active.

As a specific example, the system may be associated with a data plane device. Whenever the system receives a packet from a server and determines that the packet relates to a closure of the TCP connection, then the system is configured to determine whether the mobile device or UE for whom the TCP connection close is received is active or not. If the UE is not active, then this TCP connection closure may be buffered on the data plane device.

The UE state module 105 may determine the UE status in a plurality of manners. In an example, determining whether a mobile device is active or not can be checked by storing the last timestamp when a packet was seen for or from the subscriber. This timestamp could be stored per subscriber. If there is no packet seen for the subscriber for a configured idle period, then the subscriber (and associated UE) can be considered as idle.

In some cases, the system may use AMF notification instead of or in addition to a timestamp method to determine whether the UE is idle. Generally, the AMF notifies a 5G network functions about the two radio states IDLE and CONNECTED for each mobile device. The system may receive data from or retrieve data from the AMF to determine whether a subscriber is IDLE or CONNECTED. The IDLE state indicates that a mobile device is in IDLE state (radio is disconnected and idle, power saving mode) and the CONNECTED state is the one where mobile device's radio interface is ACTIVE and is in high power mode. The notifications from AMF may be used to gauge the radio state of the mobile device on the data plane.

As the system received a TCP connection closure from the server, the forwarding module may send the packet at a later time, once any activity is seen from mobile device like any packet is received from mobile device. This way the TCP closure message does not reach mobile phone and does not wake up mobile phone's radio interface.

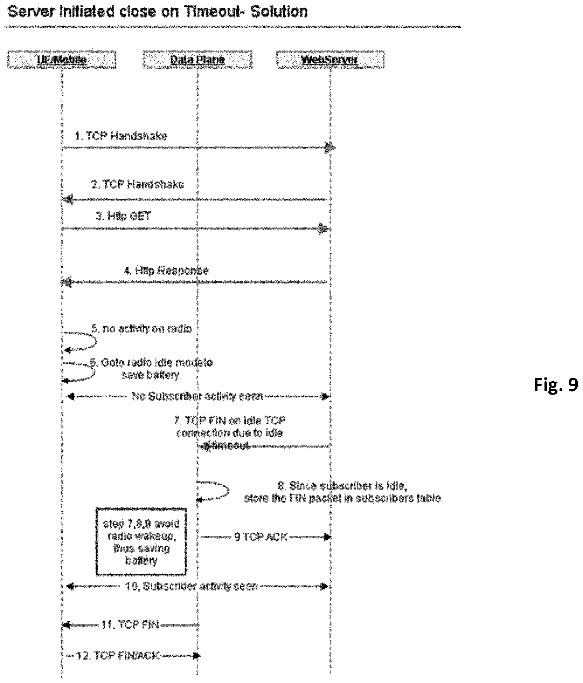

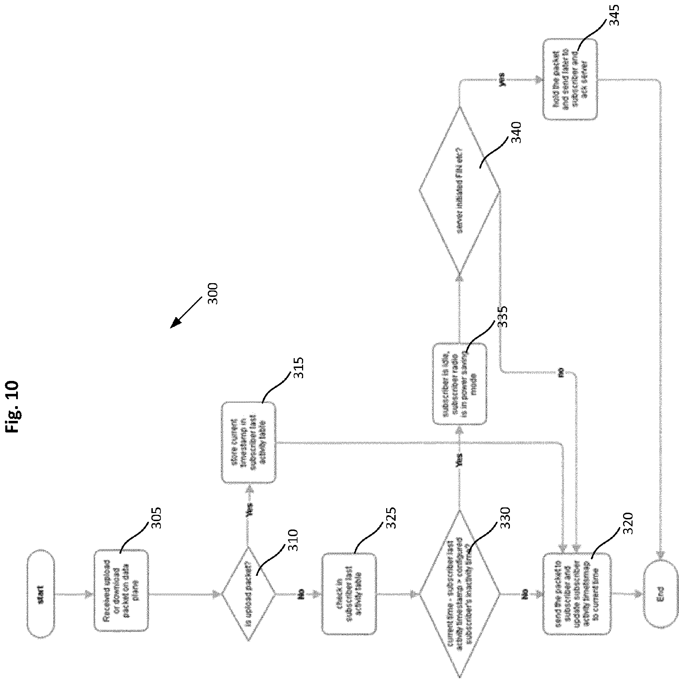

Figure 9 illustrates a sequence a method for server initiated close on timeout and Figure 10 illustrates a flow chart of the method 300 for server initiated close on timeout.

It can be seen in from figure 9, that the TCP closure packet is not sent to the mobile device because the mobile device has been noted as idle. The system is configured to hold this packet at data plane device. As such, by holding the packet, it is intended to eliminate the unwanted radio wakeup on mobile device. When high priority data is sent to the mobile device or the mobile device initiates some data, then this TCP closure packet is sent to mobile device.

Figure 10 illustrates the method 300 for this server initiated close on timeout. At 305, a traffic flow is established between a mobile UE and a server. At 310, the system determines whether the packet is an upload or download packet. If an upload packet, the system may update a timestamp associated with the UE activity time at 315, then allow the packet to continue, at 320. If the packet is a download time, the system may determine the UE status at 325. At 330, the forwarding module is configured to determine the difference between the current time and the last activity time to determine whether the subscriber is active. If the subscriber is active, the packet will be sent to the UE, at 320. In some cases, the subscriber activity may be determined by current time - last activity time > configured inactivity time. The configured inactivity time may be amended from time to time and initiated as a time after an activity where the UE is likely to have entered an IDLE radio status. If the subscriber is determined to be inactive or idle, at 335, the subscriber is assumed to be in power saving mode. If it is determined that the packet is a server initiated FIN packet, at 340, the packet will be held, at 345 until the subscriber is again active. If the packet is not a server initiated TCP FIN packet or TCP closure packet, it may be sent to the subscriber, at 320.

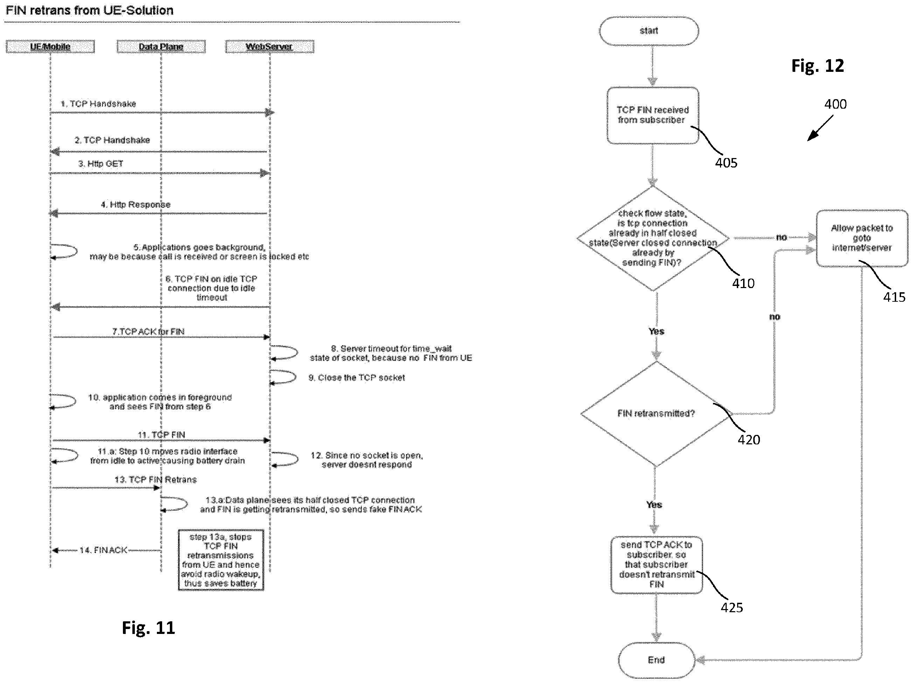

Figures 11 and 12 illustrate a scenario of FIN retransmission from the User Equipment according to an embodiment. In this scenario, the server closes a connection with mobile device, although the mobile device does not acknowledge the connection closure by sending TCP FIN. When the application associated with the TCP FIN packet becomes active again at the mobile device, the application notes that it has received FIN for the connection from the server and now the mobile device also sends the TCP FIN. This FIN is not acknowledged by the server because the server has closed the connection. Generally, the mobile device is configured to assume that this TCP FIN is dropped on network. As such, the mobile device is configured to retransmit and this retransmission continues to occurs which can be a flood of TCP FINs from mobile devices. These TCP FINs may consume lot of battery of the mobile battery.

The system is configured to maintain a record regarding the TCP connection and determines that the FIN that is being transmitted from mobile device is being sent as the server has already sent a FIN packet. As such, the forwarding module notes that there is not a requirement to forward this message to the server. The system is configured to send the ACK for this FIN to mobile device. On receipt of the ACK, the mobile device does not end up entering into a series of TCP FIN retransmissions. In this example, the mobile device would close the connection which is intended to reduce battery consumption with the reduced waking of the radio interface.

Figure 12 illustrates a method 400 of FIN retransmission from the UE. At 405, the system receives a TCP FIN from the subscriber. The packet inspection module reviews the packet to determine the flow state at 410. If the packet is not a retransmission, then the packet is sent to the server at 415. At 420, it is determined whether the packet is a TCP FIN retransmission on an already closed connection from server. If it is a retransmission on a closed connection, the system will send a TCP ACK on behalf of the server at 425. This acknowledgment provides the mobile device the required TCP closure. As several TCP closure retransmissions are avoided, this saves further battery drain from the mobile device.

In this example, as shown in figures 11 and 12, when a TCP closure is received from client, the system determines the traffic flow parameters and retrieves the state of the TCP connection. If it is determined that the TCP connection is closed at the server but not at the client, and that the packet is a FIN is retransmitted, then system is configured to send a TCP ACK for the FIN towards the client. Receiving the ACK packet will stop the client from sending further TCP FINs.

In another scenario, applications generally tend to send alert or notifications to the mobile devices from a server. These alerts and notifications may be sent on periodic or random intervals. For example, ads are sent periodically to mobile devices, notifications are sent periodically by servers, email/chats are sent by server whenever there is email to chat messages and the like. Receiving these server initiated messages turn on the radio interface of the mobile phone whenever notification is received.

These alerts and notifications may be divided in two categories, time critical applications and non time critical applications. The system detailed herein is intended to benefit from packet intelligence to detect and recognize each application by looking at the data packets for that TCP/UDP connection. It is intended that the packet inspection module may determine or detect the application of the data flow and may categorize the applications in time critical and not time critical applications. In an example, ads, RSS feeds, promotions, and the like, could be not time critical applications while, email, chat messages and the like could be time critical applications.

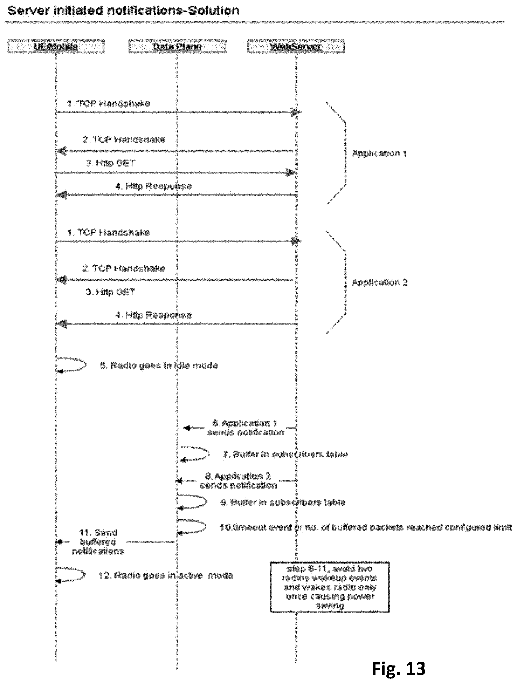

When the system determines there is a not time critical message from the server, the system may be configured to buffer those data packets until the number of packets buffered reaches a predetermined configured packets limit, until the time the packets have been held reaches a predetermined time threshold, the mobile phone becomes active, or like condition occurs. The system may then send these packets together to the mobile device. This batching of the packets is intended to awaken the radio interface of mobile device fewer times, thus saving battery as seen in the sequence diagram of server initiated notifications in figure 13.

As can be seen from figure 13, the radio interface is intended to be woken less frequently. As the system is configured to buffer the packets on the data plane and send them later to mobile device, for example, when the mobile device becomes active, when buffered packets reach a buffer threshold, when buffer time reaches a time threshold or the like.

The packet inspection module is configured to complete deep packet inspection or receive or retrieve the results of deep packet inspection. As such, it is intended to determine the application associated with each flow. The system may store the application details in a flow record and is intended to be preconfigured with information as to which applications are time critical and which are not. In some cases, the configuration of time critical applications may be updated by an operator or an administrator of the system.

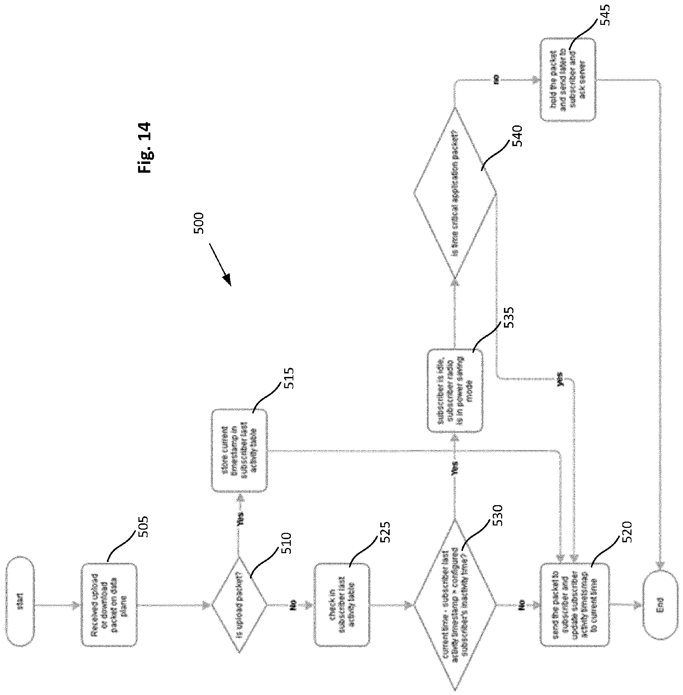

Figure 14 illustrates a method 500 for server initiated notifications according to an embodiment. The system receives a packet, at 505, and determines whether the packet is an upload or download packet, at 510. If the packet is an upload packet, the associated subscriber data may be updated with the time stamp at 515 and the packet may be forwarded at 520. If the traffic notifications are received from a server or downlink notification is received from the server, then the system determines the subscriber activity at 525. If the subscriber is idle state, for example, if last activity time of subscriber is too old current time - last activity time > configured inactivity time then, at 530, then it is determined the subscriber is idle at 535. The system then determines if it is a time critical application, at 540. If it is not time critical, the notification packet is stored in the queue of subscriber in subscriber table, at 545 and will be sent to the subscriber at a later time. The system is further configured to acknowledge the packet's receipt to the server.

It is intended that when the buffer queue has stored a predetermined number of packets, a configured time has passed since first notification was received, or the mobile device becomes active, all queued packets are sent to the mobile device and the time stamp is updated in subscriber's table.

In a further scenario, a TCP zero window probe packet is sent to a mobile device when the mobile device is downloading a video or larger file. If the download is interrupted, for example, the mobile screen is locked, a call is received or the like, the server will continue to send data. As the mobile application is not reading data from socket, the mobile device will send a TCP zero window to the server. The server is now aware that the mobile device no longer has space to receive data, but the server is configured to continue to probe the mobile device by sending TCP zero window probes periodically. Each TCP zero window probe may wake the radio interface, which drains the battery. It is intended that the system is configured to, for example, block the TCP zero window probe packets, close the connection with the server, send these probe packets to the mobile device less frequently, close the TCP connection or the like. The option selected by the system may be preconfigured, based on an operator's preferences, or other criteria and may be changed or updated periodically. Further, once there is room in the receive buffer of mobile device, the mobile device is configured to send a window update packet to server, which is intended to reduce the requirement for probing the mobile device.

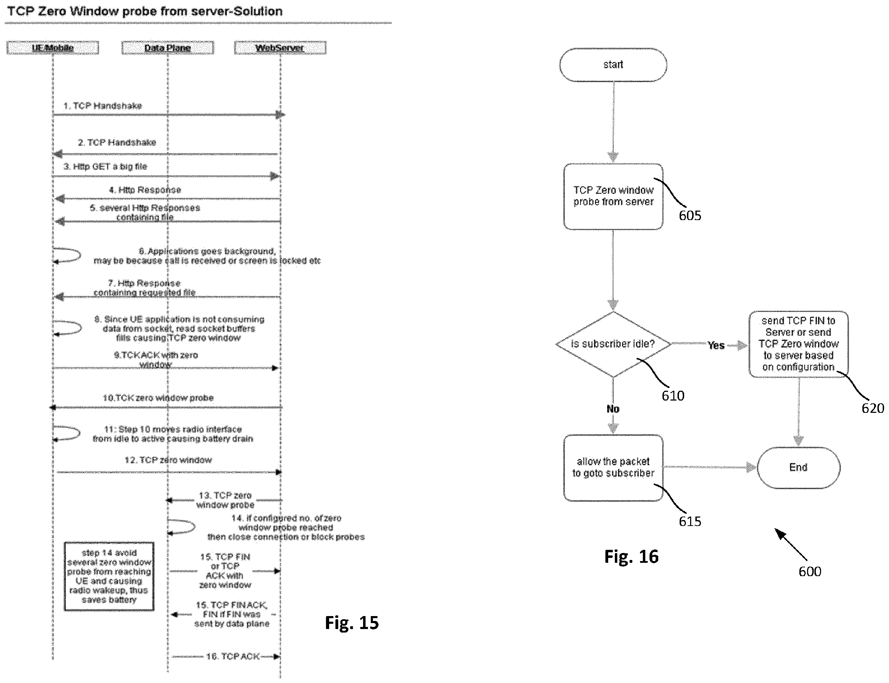

Figure 15 illustrates a sequence diagram of a TCP Zero Window probe from the server according to an embodiment. When the system retrieves or determines that there has been a TCP probe packet, the forwarding module is configured to either acknowledge the server with zero window or close the TCP connection based on configuration. This response avoids the wakeup of the radio on the mobile device thus saving battery. In some cases, the system may be configured to acknowledge the probes for an initial period, based for example on the number of probes or on a period of time, and if the mobile device remains idle, the system may close the connection. The initial period, whether based on number of requests or on time, may be configurable and may be based on, for example, an operator's preference.

Figure 16 illustrates a method 600 of a TCP zero window probe. At 605, the packet inspection module determines that a TCP zero window probe packets has been received. The UE state module will determine whether the subscriber is idle, at 610. If the subscriber is not idle, the packet will be sent to the subscriber at 615. If the subscriber is idle, at 620, the zero window probe packet may be counted and a packet count may be stored. In one example, if the packet count has reached a predetermined number of zero probe packets that have been received, the forwarding module may close the TCP connection towards the server. In other cases, the system may acknowledge the TCP zero window probes with zero window because the mobile device sends a TCP window update packet once there is room in mobile device's buffer. In still other cases, the system may forward the last received zero window packet after the packet count has reached a predetermined threshold, for example, 10, 20, 50, 100 or the like. In some cases, if a predetermined amount of time has passed since the receipt of a first buffered TCP window probe has passed, the system may send the TCP zero window probe to the mobile device. This is intended to reduce the number of radio wakeups that may occur on the mobile device.

Embodiments of the system and method are intended to be deployed on the data plane or within a data plane device in a core network. The data plane is intended to see and review uplink and downlink traffic of all mobile devices.

In some cases, the memory module of the system may maintain tables for each flow and for each subscriber (mobile device). A flow may be uniquely identified using 5 tuple information, for example, the source IP address, Source port, destination IP address, Destination port, Layer 4 protocol like TCP, SCTP.

The system, on seeing a data packet parses the 5 tuple information from the packet and then determines if there is a flow record maintained on the data plane keyed by the 5 tuple information. If the flow is not found, then a new flow record is created. This flow record table may also hold state information regarding the flow, such as: sequence number, acknowledgement number, last packet seen timestamp, TCP connection state, retransmission attempts, application name, and the like.

| **source IP** | **Destination IP** | **Source Port** | **Destination Port** | **L4 Protocol** | **TCP State** | **Application** |
|---|---|---|---|---|---|---|
| 1.2.3.4 | 1.2.3.5 | 1234 | 5678 | TCP | OPEN.sequnce number, ack number etc | facebook |

The data plane may also have a table keyed by subscriber identifier, for example, IP Address, and this table may be called subscriber's table and may hold the last subscriber activity timestamp to calculate if subscriber is now idle or not. In this way, the user equipment state, such as active or idle may be determined. This table may also hold the queue, which can hold packets which may be sent to subscribers at a later time.

| **SubscriberIdentifier(Key) like IPAdress etc** | **last activity timestamp** | **queue of buffered packets** |
|---|---|---|
| 1.2.3.4 | 1621077996 | packet1, packet2, ... packet n |
| 4.5.6.7 | 1621077900 | packet1, packet2, ... packet n |
| 10,11,12,13 | 1621077800 | packet1, packet2, ... packet n |

Embodiments of the system and method detailed herein are intended to provide optimized radio traffic for mobile device without upgrading or amending mobile phones, servers or TCP stack. Further, by managing/optimizing radio traffic, barrier life on the mobile devices may be extended. Network resources and server resources may be improved as less messages may be sent between clients and servers.

It is intended that by providing the system and method on the data plane, that is generally subscribe aware, the optimized radio traffic may be provided to subscribers on a premium basis. In some cases, only gold tier subscribers would be offered this plan and provided with the battery savings the system and method are intended to provide. Further, by providing less battery drain on subscriber's devices, an operator may be able to attract new business or receive upgrades to subscriber plans in order to opt into the battery savings.

The embodiments of the system and method are intended to reduce the overall network traffic with less redundant traffic is being sent.

Further, embodiments of the system and method are intended to aid in saving resources on radio base stations/access network by blocking redundant traffic towards access network. Radio resources on radio base stations are expensive.

In the preceding description, for purposes of explanation, numerous details are set forth in order to provide a thorough understanding of the embodiments. However, it will be apparent to one skilled in the art that these specific details may not be required. It will also be understood that aspects of each embodiment may be used with other embodiments even if not specifically described therein. Further, some embodiments may include aspects that are not required for their operation but may be preferred in certain applications. In other instances, well-known structures may be shown in block diagram form in order not to obscure the understanding. For example, specific details are not provided as to whether the embodiments described herein are implemented as a software routine, hardware circuit, firmware, or a combination thereof.

Embodiments of the disclosure or elements thereof can be represented as a computer program product stored in a machine-readable medium (also referred to as a computer-readable medium, a processor-readable medium, or a computer usable medium having a computer-readable program code embodied therein). The machine-readable medium can be any suitable tangible, non-transitory medium, including magnetic, optical, or electrical storage medium including a diskette, compact disk read only memory (CD-ROM), memory device (volatile or non-volatile), or similar storage mechanism. The machine-readable medium can contain various sets of instructions, code sequences, configuration information, or other data, which, when executed, cause a processor to perform steps in a method according to an embodiment of the disclosure. Those of ordinary skill in the art will appreciate that other instructions and operations necessary to implement the described implementations can also be stored on the machine-readable medium. The instructions stored on the machine-readable medium can be executed by a processor or other suitable processing device, and can interface with other modules and elements, including circuitry or the like, to perform the described tasks.

The above-described embodiments are intended to be examples only. Alterations, modifications and variations can be effected to the particular embodiments by those of skill in the art without departing from the scope, which is defined solely by the claim appended hereto.

## Claims

1. A method for radio traffic management in a computer network comprising:
determining user equipment (UE) status associated with a traffic flow session;
determining traffic flow parameters associated with the traffic flow associated with the UE;
determining a change in the UE status; and
determining a traffic action for at least one packet associated with the traffic flow based on the UE status.

2. A method according to claim 1 wherein the change in the UE status is from active to idle and the traffic action is selected from the group comprising:
queueing packets until there is a further UE change in status;
closing the traffic flow session with a server; and
responding to a TCP window probe on behalf of the UE

3. A method according to claim 1, wherein the change in the UE status is from idle to active and the traffic action is to respond to at least one packet initiated by the UE.

4. A method according to claim 2, wherein the queued packets are transmitted to the UE on a change from idle to active.

5. A method according to claim 2, wherein the queued packets are transmitted to the UE after a predetermined time threshold is met.

6. A method according to claim 2 wherein the queued packets are transmitted to the UE after a predetermined number of packets have been queued.

7. A method according to any one of claims 1 to 6, further comprising:
receiving a UE packet from the UE;
determining if the UE packet is associated with a previously closed connection; and
transmitting a further packet to the UE to close the connection for the UE.

8. A method according to any one of claims 1 to 7, further comprising,
determining if the UE status is idle;
determining if the at least one packet is a time critical packet;
if the at least one packet is not time critical, storing the packet for a predetermined amount of time or until there is a change in UE status; and
if the at least one packet is time critical, sending the packet to the UE.

9. A system for radio traffic management in a computer network comprising:
a User Equipment (UE) state module configured to determine UE status associated with a traffic flow session;
a packet inspection module configured to determine traffic flow parameters associated with the traffic flow associated with the UE;
a forwarding module configured to determine a traffic action for at least one packet associated with the traffic flow based on the UE status.

10. A system according to claim 9 wherein if the UE state module determines there has been a change in the UE status from active to idle, the forwarding module is configured the provide the traffic action is selected from the group comprising:
queueing packets until there is a further UE change in status;
closing the traffic flow session with a server; and
responding to a TCP window probe on behalf of the UE

11. A system according to claim 9, wherein if the UE state module determines there has been a change in the UE status from idle to active, the forwarding module is configured to respond to at least one packet initiated by the UE.

12. A system according to claim 11, wherein the forwarding module is configured to transmit queued packets to the UE, when the UE remains in idle status, after a predetermined time threshold is met.

13. A system according to claim 9 wherein the forwarding module is configured to transmit queued packets to the UE, when the UE remains in idle status, after a predetermined number of packets have been queued.

14. A system according to any one of claims 9 to 13, wherein:
the packet inspection module is configured to determine if a packet has been received from the UE;
the analysis module is configured to determine the UE packet is associated with a previously closed connection; and
the forwarding module is configured to transmit a further packet to the UE to close the connection for the UE.

15. A system according to any one of claims 9 to 14, wherein,
the UE state module is configured to determine if the UE status is idle;
the packet inspection module is configured to determine whether the at least one packet is a time critical packet;
if the at least one packet is not time critical, the forwarding module stores the packet for a predetermined amount of time or until there is a change in UE status; and
if the at least one packet is time critical, the forwarding module sends the packet to the UE.
